# EUROPEAN PATENT APPLICATION

(11) **EP 0 781 908 A2**
(43) Date of publication of application: **02.07.1997**
(21) Application number: 96120837.8
(22) Date of filing: 23.12.1996
(51) Int. Cl.: F02C 6/12, F01D 25/24, F01D 25/12, F01D 25/28

(54) **Turbocharger construction**

(30) Priority: 26.12.1995 JP 339169/95
(71) Applicant: Ishikawajima-Harima Heavy Industries Co., Ltd., Chiyoda-ku, Tokyo (JP)
(72) Inventor: Koike, Takaaki, Hachioji-shi, Tokyo (JP); Takahashi, Yukio, Sodegaura-shi, Chiba (JP)
(74) Representative: Schaumburg, Thoenes & Thurn

(57) **Abstract**

The turbocharger has a rotor shaft (9) having two ends, a turbine rotor (2) mounted on one end of the rotor shaft (9), a compressor impeller (8) mounted on the other end of the rotor shaft (9), a bearing unit (3) including a plurality of bearings (14) for journally supporting a substantial length of the rotor shaft, a main housing or integrated housing (1) including a turbine housing portion (1a) for housing the turbine rotor (2) and a bearing housing portion (1b) for housing the bearing unit (3), and a compressor impeller housing (34) attached to the main housing for housing the compressor impeller (8). A heat insulator (10; 11) is provided between the turbine housing portion (1a) and the bearing housing portion (1b).

## Description

The present invention relates to a turbocharger and particularly to an improvement of a housing for a turbocharger, and it further relates to a method of manufacturing the turbocharger.

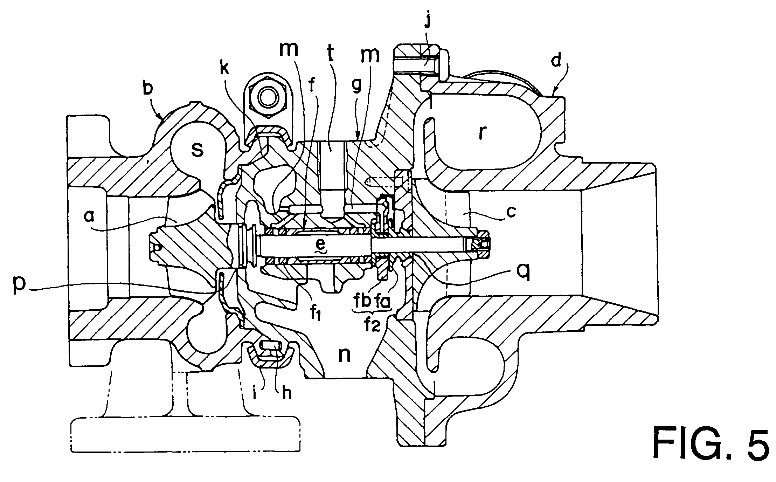

Turbochargers and housings therefor are known in the art. One example of a conventional turbocharger housing is illustrated in Figure 5 of the accompanying drawings in cross section. This typical turbocharger housing includes a turbine housing b for housing a turbine rotor a, a compressor housing d for housing a compressor impeller c and a bearing housing g for housing a group of bearings f for a rotor shaft e. The rotor shaft e connects the turbine rotor a with the compressor impeller c. The bearing housing g is positioned between the turbine and compressor housings b and d.

The turbine housing b and bearing housing g are aligned by a pin h provided at their interface k. Outer peripheries of these two housings b and g at the interface k are clamped by a clamp i. The bearing and compressor housings g and d are coupled by bolts j.

The set of bearings f includes a journal bearing f1 and a thrust bearing f2. Specifically, in the bearing housing g, provided are the journal bearing f1 fitted in a shaft bore formed in the bearing housing g near an end of the shaft bore on the turbine housing side and the thrust bearing f2 mounted at the opposite end of the shaft bore. The journal bearing f1 is a cylindrical full float bearing which bears a radial force. The thrust bearing f2 includes a first ring-shaped member fa fixed on the rotor shaft e and a second member fb engaged with the first member fa and secured to the bearing housing g. The thrust bearing f2 bears a thrust force.

This type of turbocharger housing includes three housings b, g and d and two separate bearings f1 and f2 inside the bearing housing g so that it needs a lot of parts and a lot of assembling processes.

In addition, in order to appropriately provide the radial and thrust bearings f1 and f2 in the bearing housing g, a straight, narrow and long shaft bore should be accurately formed in the bearing housing g and installation of the bearings f1 and f2 should be carried out with great care. Particularly, the bearings f1 and f2 should be kept off dusts or the like: it should be stored and maintained in a clean atmosphere before and during installation. Therefore, a lot of labor, time and care is required in a delicate bearing installation operation. In addition, a plurality of narrow bores m is also required for delivery of a lubrication oil to the bearings f1 and f2 from a lubrication oil entrance t. On the other hand, the connection between the left and center housings b and g and that between the center and right housings g and d do not require high accuracy. Conventionally, however, the connection between the housings b, g and d and the installation of the bearings f1 and f2 into the bearing housing g are performed on a single manufacturing line.

Further, a gas may leak from the interface k between the turbine housing b and bearing housing g.

The lubrication oil fed from the oil inlet or entrance t flows downward in the bores m, lubricates the bearings f1 and f2, drops to an exit n opened at a lower portion of the bearing housing g and ultimately returns to an engine (not shown) via a drain oil line (not shown).

In Figure 5, r designates a diffuser formed in the compressor housing d and s designates a nozzle formed in the turbine housing b.

A similar housing structure for a turbocharger is disclosed in Japanese Patent Application, Laid-Open Publication No. 7-139363.

One object of the present invention is to provide a housing for a turbocharger which does not have the above described problems.

According to one aspect of the present invention, a turbine housing for a turbine rotor and a bearing housing for rotation shaft bearings are united to a one piece part. This reduces the number of parts and the number of manufacturing processes and in turn results in easier assembling. Further, a gas leakage from connection between the turbine and bearing housings is completely prevented.

A plurality of rotation shaft bearings may be manufactured as a single unit on a separate and special manufacturing line in a clean atmosphere and such a bearing unit may be installed into the above mentioned one piece housing. Since the bearings are assembled on a separate manufacturing line in a clean atmosphere, the cleanness and high accuracy required to the bearing installation are attained. The bearing unit which is previously prepared is then carried to a manufacturing line on which the one piece housing is moved, and the bearing unit is incorporated into the one piece housing. This series of processes is simpler than the conventional one.

A heat insulation means may be provided behind the turbine rotor in the one piece housing for preventing transfer of a substantial part of heat to the bearing unit from the turbine rotor. The turbine rotor is subjected to a very hot exhaust gas and heated to a considerably high temperature. The heat insulator means suppresses temperature elevation of the bearing unit and prevents the thermal damages/deteriorations otherwise caused by the heat transmitted from the turbine rotor.

The one piece housing may have an exhaust gas opening which also allows insertion of the turbine rotor into the one piece housing. This facilitates the assembling of the turbocharger.
- Figure 1: is a sectional view of a turbocharger according to one embodiment of the present invention;
- Figure 2: illustrates a cross section of a modification of a turbocharger according to the present invention;
- Figure 3: is an illustration of a bearing unit shown in Figure 1 as viewed from the left in Figure 1;
- Figure 4: illustrates a fragmentary enlarged sectional view of a turbocharger housing shown in Figure 1 when a radial turbine rotor is employed; and
- Figure 5: depicts a sectional view of a turbocharger according to a prior art.

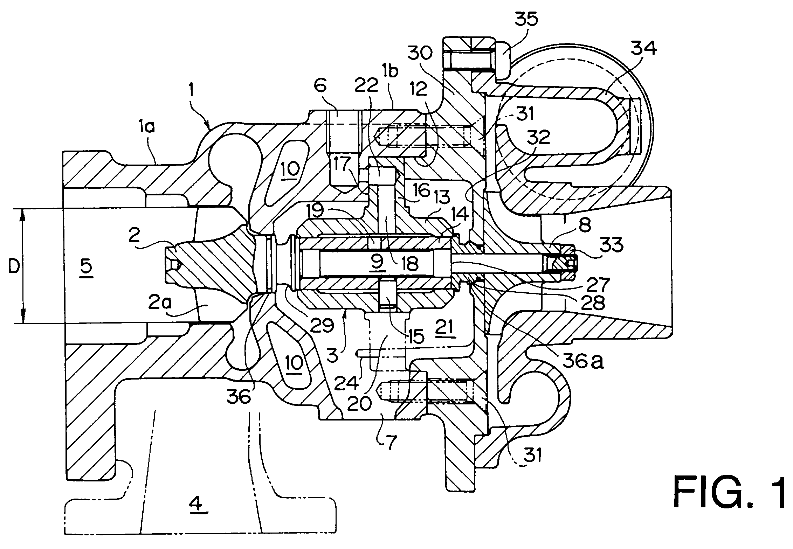

Now, preferred embodiments of the present invention will be described with reference to Figures 1 to 4 of the accompanying drawings.

Referring to Figure 1, a turbocharger housing of this embodiment includes a one piece housing 1 which is comprised of a turbine housing portion 1a and a bearing housing portion 1b. The turbine housing portion 1a houses a turbine rotor 2 and the bearing housing portion 1b houses a bearing unit 3.

The turbine housing portion 1a has an exhaust gas inlet opening 4 directed in a radial direction of the turbocharger and an exhaust gas exit opening 5 directed in an axial direction. An exhaust gas enters the turbine housing portion 1a from the inlet opening 4, drives the turbine rotor 2 and flows to the exit opening 5. The bearing housing portion 1b has a lubrication oil inlet 6 directed upward and an exit 7 directed downward. A lubrication oil is fed into the bearing housing portion 1b from the lubrication entrance 6 and lubricates the bearing unit 3 before it is discharged from the lubrication oil exit 7. The lubrication oil expelled from the exit 7 is delivered to an engine (not shown) through a drain oil line (not shown). The bearing unit 3 journally supports a rotation shaft 9 which connects the turbine rotor 2 with a compressor impeller 8 (will be described later in detail). The rotation shaft 9 extends from the turbine rotor 2. The rotation shaft 9 and turbine rotor 2 are manufactured as one unit.

The one piece housing 1 also has an annular bore 10 formed inside itself behind the turbine rotor 2 for passage of a cooling water. The cooling water bore 10 has an entrance and an exit (not shown). The cooling water flows in the bore 10 and absorbs heat of the turbine rotor 2 and turbine housing portion 1a heated by the very hot exhaust gas respectively. Consequently, most of the heat is not transferred to the bearing unit 3 from the turbine rotor 2 and turbine housing portion 1a. In this embodiment, the cooling water and cooling water passage 10 form in combination a heat insulation means. It is of course that a lubrication oil may be used instead of the cooling water.

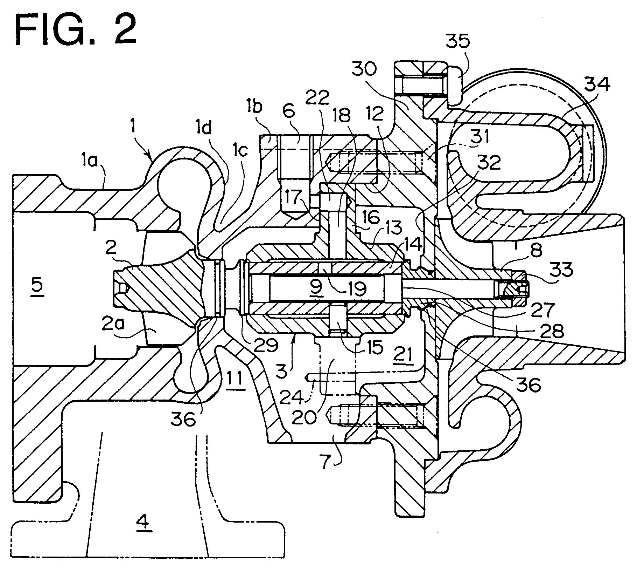

It should be noted that the heat insulation means is not limited to the combination of cooling fluid (water or oil) and its passage. For example, an air or space may be used as a heat insulator. Specifically, as illustrated in Figure 2, the one piece housing 1 may be scraped out at an area 1c between the turbine housing portion 1a and bearing housing portion 1b to form a heat insulating space 11 between the turbine housing portion 1a and bearing housing portion 1b. In addition, the heat insulation space 11 may be filled with a heat insulating material (not shown) and/or a heat radiator such as radiation fins (not shown) may be provided on a back 1d of the turbine housing portion 1a.

Referring back to Figure 1, the bearing housing portion 1b of the one piece housing 1 has an opening 12 directed in an opposite direction to the exhaust gas exit opening 5 of the turbine housing portion 1a. The bearing unit 3 is inserted into the one piece housing 1 from the opening 12. The bearing unit 3 includes a generally cylindrical bearing box 13 and a cylindrical semi floating bearing 14 fitted in the bearing box 13. The bearing box 13 and semi floating bearing 14 have the same length. The positioning and fixing of the semi floating bearing 14 relative to the bearing box 13 is determined and achieved by a thrust pin 15. The rotation shaft 9 rotatably extends through the semi floating bearing 14.

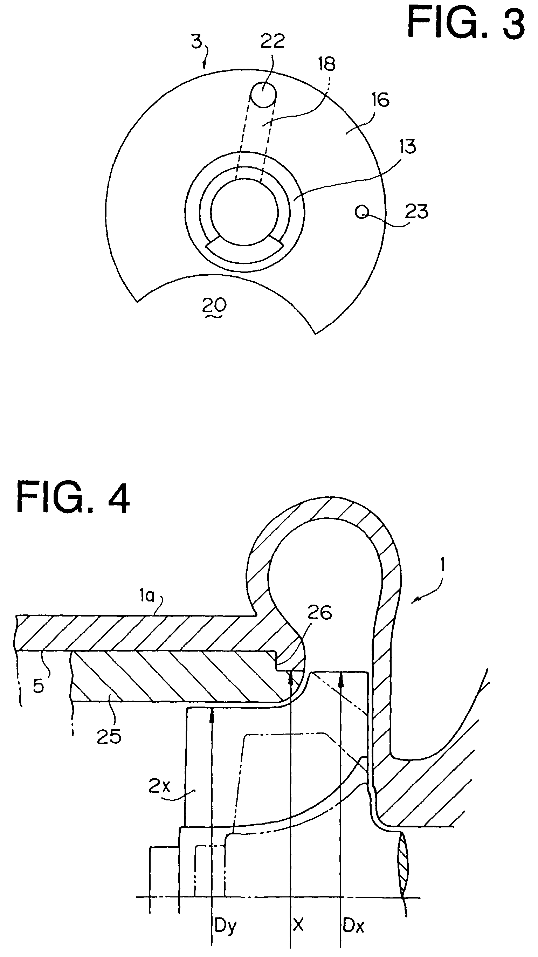

A clearance is formed between the semi floating bearing 14 and bearing box 13 to form a lubrication oil film. Likewise, a clearance is formed between the semi floating bearing 14 and rotation shaft 9 for formation of another lubrication oil film. Therefore, the rotation shaft 9 and bearing 14 are maintained in a floating condition by the lubrication oil, respectively. The bearing box 13 also has a sword guard-like flange member 16 which extends radially outward. The shape of this member 16 as viewed in the longitudinal direction of the rotation shaft 9 is shown in Figure 3. As understood from Figure 1, when the bearing unit 3 is inserted into the one piece housing 1 from the right opening 12, the flange member 16 of the bearing unit 3 encounters a stepwise portion 17 formed in the one piece housing 1 and the position of the bearing unit 3 relative to the one piece housing 1 is determined by the stepwise portion 17.

A lubrication oil passage 18 is formed in the flange member 16 such that it generally extends upward in a perpendicular direction relative to the rotation shaft 9. The lubrication oil passage 18 is bent 90 degrees at its upper end portion 22 in a horizontal direction so that an upper end of the oil passage 18 is communicated with the lower end of the lubrication oil inlet 6. The lubrication oil inlet 6 is drilled downwardly from an outer surface of the one piece housing 1 in a perpendicular direction relative to the rotation shaft 9. As understood from Figure 3, the upper end of the oil passage 18 opens in a lateral surface of the flange member 16 at 22. As illustrated in Figure 1, the lower end of the oil passage 18 opens in an inner surface of the bearing box 13 so that the oil passage 18 is communicated with the space between the bearing box 13 and semi floating bearing 14. A perpendicular through hole 19 is also formed in the semi floating bearing 14. This bore 19 partly overlaps the lubrication oil passage 18 so that its upper end communicates with the lower end of the oil passage 18. A lower end of the bore 19 connects to the space between the semi floating bearing 14 and rotation shaft 9. Therefore, the lubrication oil introduced into the oil entrance 6 of the one piece housing 1 flows into the lubrication oil passage 18 bored in the flange member 16 and reaches the space between the bearing box 13 and semi floating bearing 14. The lubrication oil also flows into the bore 19 of the semi floating bearing 14 and reaches the space between the semi floating bearing 14 and rotation shaft 9. The lubrication oil flows out of the bearing unit 3 from ends of the semi floating bearing 14 and bearing box 13 respectively and is ultimately discharged from the one piece housing 1 from the lubrication oil exit 7.

As depicted in Figure 3, the sword guard-like flange 16 of the bearing unit 3 has an arcuate cut out 20 at its lower portion. As understood from Figure 1, this cut out portion 20 is necessary to allow the lubrication oil to flow downward from the right side of the flange 16. If the flange 16 was a complete circle as indicated by the double-dot line in Figure 1 below the pin 15, the right space 21 of the flange 16 would be closed by the flange 16 and the lubrication oil would be confined. In Figure 1, numeral 24 designates a spring pin which engages into a through hole 23 shown in Figure 3. The spring pin 24 and the mating hole 23 determine in combination the position of the flange 16.

After placing the bearing unit 3 in the main housing 1, the turbine rotor 2 and its shaft 9 are inserted into the main housing 1 from the exhaust gas exit 5. In this embodiment, the turbine rotor 2 is a mixed flow turbine and has a uniform diameter D in the longitudinal direction of the rotation shaft 9. The diameter D is defined by a plurality of turbine blades 2a of the turbine rotor 2. The diameter of the exhaust gas exit 5 is determined such that the insertion of the turbine rotor 2 from the exhaust gas exit 5 is possible. Conventionally, the diameter of the turbine rotor varies (or increases) in the longitudinal direction of the rotation shaft as shown in Figure 5. Therefore, it is not feasible to insert the turbine rotor a from the exhaust gas exit. In the present invention, as mentioned earlier, it is possible to insert the turbine rotor 2 from the exhaust gas exit 5 even if the turbine housing portion 1a and bearing housing portion 1b are united since the diameter of the turbine rotor 2 is uniform and the exhaust gas exit has a suitable diameter.

Referring to Figure 4, if the diameter of the turbine rotor 2 is not uniform in the longitudinal direction of the rotor shaft 9 (particularly if a diameter Dx on the rear side is larger than a diameter Dy on the front side like a conventional radial turbine rotor 2X), then the exhaust gas exit 5 of the one piece housing 1 is formed to have a diameter X which conforms to the maximum diameter Dx. After the turbine rotor 2X is placed in position in the one piece housing 1, a special liner 25 is inserted from the exhaust gas exit 5. The liner 25 is shaped to accommodate to an outer configuration of the turbine rotor 2X and serves as an exducer. The exhaust gas exit 5 has an annular stepwise portion 26 at its deepest position to determine the position of the liner 25. In this manner, the turbine rotor 2 is incorporated into the one piece housing 1.

In Figure 4, the double-dot line indicates the configuration of a mixed flow turbine rotor which has a non-uniform diameter. In this case, the exhaust gas exit 5 also has a diameter X which can cope with the largest diameter Dx of the turbine rotor, and the liner 25 is attached later to almost fill up the clearance between the exhaust gas exit 5 and the turbine rotor or to leave a necessary clearance.

Upon installation of the turbine rotor 2 into the main housing 1, the rotor shaft 9 extending from the turbine rotor 2 is inserted into the semi floating bearing 14 of the bearing unit 3 as illustrated in Figure 1 such that it penetrates the bearing unit 3. Then, a thrust bearing 28 is attached to a stepwise portion 27 of the rotor shaft 9. The rotor shaft 9 has a length having a reduced diameter extending from the stepwise portion 27. The stepwise portion 27 is coplanar to the end face of the semi floating bearing 14. A thrust force applied to the rotor shaft 9 is born by the thrust bearing 28 and/or an enlarged portion 29 of the rotor shaft 9 formed at an end opposite the thrust bearing 28 as the thrust bearing 28 and enlarged portion 29 abut the end faces of the semi floating bearing 14.

After that, a seal plate 30 is attached to the main housing 1 by bolts 31 to close the opening 12 of the main housing 1. The seal plate 30 seals the one piece housing 1 to prevent leakage of the lubrication oil from the opening 12, and also clamps the flange 16 of the bearing unit 3 between the stepwise portion 17 of the housing 1 and itself by its leg portion which is fitted in the opening 12. The seal plate 30 has a recess 32 at its inner center and houses an approximate right third of the bearing unit 3. The seal plate 30 also has a center through hole in which the thrust bearing 38 is partly fitted. The center hole has a generally truncated conical shape and the thrust bearing 28 has a mating conical shape so that the thrust bearing 28 is firmly held by the seal plate 30. The rotor shaft 9 extends through this center hole.

After screwing the seal plate 30, a compressor impeller 8 is mounted on a free end of the rotor shaft 9 by a nut 33. Then, a compressor casing 34 is attached to the main housing 1 by bolts 35 to cover the compressor impeller 8 and to complete the assembling.

The turbocharger housing having the above described construction has a one piece main housing 1 which is comprised of the turbine housing portion and bearing housing portion so that a step of connecting the turbine housing with the bearing housing and parts necessary for this step, which are required in a conventional assembling method, are dispensed with. Therefore, the number of parts necessary for the assembling the turbocharger is reduced and the assembling process is simplified. This facilitates automatization of the turbocharger. Moreover, a problem of gas leakage from the interface between the turbine housing and bearing housing never occurs.

The bearing unit 3 is previously prepared on a separate manufacturing line, carried to a main manufacturing line (i.e., turbo-charger assembling line) and is inserted into the main housing 1 from the opening 12. The bearing unit 3 should have high accuracy and cleanness so that it is manufactured to meet such requirements on a separate line. On the main line, the bearing unit 3 is simply inserted into the main housing 1 so that the assembling step on this manufacturing line is easy. A delicate bearing installation step is not carried out on the turbocharger assembling line. Consequently, the turbocharger can be manufactured at a lower cost and with high precision.

Formation of narrow bores for the bearing f1 (Figure 5) and rotor shaft and narrow lubrication oil passages for them is unnecessary unlike the conventional turbocharger housing. In other words, the opening 12 of the main housing 1 is large, a concave space continuous from the opening 12 toward the exhaust gas exit 5 is also sufficiently large and all of the bores made in the housing 1 do not require high precision in the present invention. Therefore, the turbocharger can be manufactured with a low cost. A core used for casting (or molding) the one piece housing 1 can have a simple shape since the inner space from the right opening 12 has a simple shape. Therefore, the casting can be carried out easily and inexpensively. After the casting, particular portions of the housing 1 which require high accuracy such as the step portion 17 for supporting the flange 16 and an opening 36 for supporting the turbine rotor 2 undergo machining or cutting. An opening 36a for supporting the thrust bearing 28 also requires certain precision so that machining is applied.

Since the heat insulating means (i.e., the cooling fluid passage 10 (Figure 1) or heat insulation space 11 (Figure 2)) is provided behind the turbine rotor 2, a considerable part of the heat of the turbine rotor 2 and turbine housing portion 1a which is transferred to them from the very hot exhaust gas is blocked by the heat insulating means and is not transferred to the bearing unit 3. Therefore, the bearing unit 3 is protected from the thermal damages and deteriorations.

Since the bearing unit 3 is supported or suspended in the large hollow space defined between the large recess formed by the main housing 1 on the opening 12 side and the inner recess of the compressor casing 34 and it only contacts the main housing 1 at its sword guard-like flange 16, a heat transfer route to the bearing unit 3 from the turbine rotor 2 and turbine housing portion 1a is limited and elongated as compared with the conventional arrangement shown in Figure 5. The heat is transmitted to the bearing unit 3 through the flange 16 only. Therefore, the temperature rise of the bearing unit 3 due to heat transfer from the neighboring components is suppressed.

Since the bearing unit 3 is supported in a suspended or hung manner in the turbocharger housing by the flange 16 clamped between the main housing 1 and compressor housing 34, a relatively large annular space is created around the bearing unit 3 and a lubrication oil flow in and discharge from the bearing unit 3 are facilitated. In the prior art arrangement as shown in Figure 5, on the other hand, only a small space is formed in the vicinity of the bearings f1 and f2. Therefore, if clogging occurs in the drain oil line (not shown) extending to the engine (not shown) from the lubrication oil exit n and the turbine rotor a area and/or compressor impeller c area becomes negative in pressure (the pressures in these areas become negative when, for example, a throttle or accelerator is throttled.), then a large pressure difference is suddenly produced between the turbine housing b and bearing housing g and/or between the bearing housing g and compressor housing d. This pressure difference causes the lubrication oil in the bearing housing g to leak to the turbine rotor a and/or compressor impeller c through a clearance p between the turbine rotor bearing and bearing housing g and/or a clearance g between the rotor shaft e bearing and the compressor impeller c. In the present invention, there is no possibility of oil leakage since a large free space is created around the bearing unit 3 as illustrated in Figure 3 and this large free space provides better pressure balance in the bearing housing.

It should be noted that the bearing unit 3 is not limited to the one having a semi floating bearing 14. For instance, a full floating type bearing set such as that shown in Figure 5 including a journal bearing f1 and thrust bearing f2 may be employed as far as these bearings f1 and f2 can be manufactured as a single bearing unit on a separate manufacturing line.

## Claims

1. A turbocharger including: a rotor shaft (9); a turbine rotor (2) mounted on one end of the rotor shaft (9); a compressor impeller (8) mounted on the other end of the rotor shaft (9); a plurality of bearings (14) for journally supporting a substantial length of the rotor shaft; housings for housing the turbine rotor (2) and the plurality of bearings (14); and a compressor impeller housing (34) attached to the housings for housing the compressor impeller (8), characterized in that the housings are integrated into a single housing (1) which includes a turbine housing portion (1a) for housing the turbine rotor (2) and a bearing housing portion (1b) for housing the plurality of bearings (3).

2. The turbocharger of claim 1, characterized in that the plurality of bearings (14) is integrated into a single bearing unit (3).

3. The turbocharger of claim 1 or 2, characterized in that the turbocharger further includes heat insulating means (10) (11) between the turbine housing portion (1a) and bearing housing portion (1b).

4. The turbocharger of claim 3, characterized in that the turbine rotor (2) has a plurality of blades (2a) of uniform diameter in a longitudinal direction of the rotor shaft (9) and an exhaust gas exit (5) formed in the single housing (1) has a diameter which conforms to the diameter of the turbine blades (D).

5. The turbocharger of claim 3, characterized in that the heat insulating means includes a bore (10) formed in the single housing (1) and a fluid flowing in the bore (10).

6. The turbocharger of claim 5, characterized in that the fluid is water or oil.

7. The turbocharger of claim 3, characterized in that the heat insulating means is a space (11).

8. The turbocharger of claim 7, characterized in that a heat insulating material is placed in the space (11).

9. The turbocharger of claim 3, characterized in that the heat insulating means includes a plurality of heat radiation fins.

10. The turbocharger of claim 2, characterized in that the bearing unit (3) includes a bearing casing (13), the plurality of bearings (14) provided in the bearing casing (13) and a flange (16) which extends outward from the bearing casing and which is mounted on the bearing housing portion (1b) so that heat of the bearing housing portion (1b) is transmitted to the bearing casing (13) and in turn plurality of bearings (14) through the flange (16) and so that the bearing casing (13) is supported in a suspended manner in the single housing (1) and a substantial free space is created around the bearing casing (13) inside the single housing (1).

11. A method of assembling a turbocharger, comprising the steps of:
A) preparing a rotor shaft (9);
B) attaching a turbine rotor (2) onto the rotor shaft (9) at one end of the rotor shaft;
C) preparing a bearing unit (3) including a plurality of spacedly arranged bearings (14) for supporting a substantial length of the rotor shaft (9);
D) molding a single integrated housing unit (1) which includes a turbine housing portion (1a) for housing the turbine rotor (2) and a bearing housing portion (1b) for housing the bearing unit (3), the single housing unit (1) having a first opening (5) which serves as an exhaust gas exit and a second opening (12) which serves as a space for receiving the bearing unit;
E) inserting the bearing unit (3) into the single housing unit (1) from the second opening (12);
F) inserting the rotor shaft (9) into the single housing unit (1) from the first opening (5) so that a substantial part of the rotor shaft (9) is journally supported by the bearings (14) of the bearing unit (3) and the other end of the rotor shaft (9) projects from the bearing unit (3) a certain length;
G) attaching a thrust bearing (28) to an end face (27) of the bearing unit (3) from which end face the rotor shaft (9) projects;
H) mounting a seal plate (30) to close the second opening (12), to clamp the bearing unit (3) between the single housing unit (1) and itself and to hold the thrust bearing (28), the seal plate (30) having a bore into which the thrust bearing (28) is partly fitted in and through which the rotor shaft (9) extends;
I) mounting a compressor impeller (8) onto the other end of the rotor shaft (9); and
J) mounting a compressor casing (34) onto the single housing unit (1) to cover the compressor impeller (8).

12. The assembling method of claim 11, characterized in that it further includes the step of:
K) attaching a liner member (25) to the single housing unit (1) if a clearance between the turbine rotor (2) and an inner wall of the single housing unit (1) is greater than a predetermined value.

13. The assembling method of claim 11 or 12, characterized in that the steps A) and B) are carried out by a single molding step.

14. The assembling method of claim 11 or 12, characterized in that the steps A) to D) are carried out simultaneously on separate manufacturing lines.
